# EUROPEAN PATENT APPLICATION

(11) **EP 1 954 072 A1**
(43) Date of publication of application: **06.08.2008**
(21) Application number: 07250457.4
(22) Date of filing: 02.02.2007
(51) Int. Cl.: H04Q 7/22

(54) **Remote monitoring method and system using mobile telephony**

(71) Applicant: Chen, Mao-Jung, Chiayi Hsien (TW)
(72) Inventor: Chen, Mao-Jung, Chiayi Hsien (TW)
(74) Representative: Mackenzie, Andrew Bryan

(57) **Abstract**

A remote monitoring method is to be implemented using mobile telephone service equipment (3) including a mobile telecommunications switching office (31) and a plurality of base stations (32) operably associated with the mobile telecommunications switching office (31). The remote monitoring method includes: enabling the mobile telecommunications switching office (31) to receive a monitoring request from a requesting party, the monitoring request including a telephone number used by a target terminal (4) of a monitored party; in response to the monitoring request, enabling the mobile telecommunications switching office (31) to determine if the target terminal (4) of the monitored party is able to be serviced by the mobile telephone service equipment (3); and upon determining that the target terminal (4) of the monitored party is unable to be serviced by the mobile telephone service equipment (3), enabling the mobile telecommunications switching office (31) to send a corresponding notification to the requesting party. A remote monitoring system that implements the method is also disclosed.

## Description

The invention relates to a method and system for monitoring, more particularly to a remote monitoring method and system using mobile telephony.

Mobile devices, such as cell phones, have become an integral part of modern life in view of the convenience they provide. Aside from making it possible for people to communicate with each other without the requirement of being at fixed locations, mobile devices presently have the functions of sending and receiving short messages, permitting access to the Internet, and sending and receiving multi-media data. It is desirable to further expand the functionality of mobile devices to attract more subscribers without incurring substantial changes in the infrastructure of existing mobile telephone service equipment.

One object of the present invention is to provide a remote monitoring method which is implemented using mobile telephone service equipment and which involves sending a notification to a requesting party upon determining that a target terminal of a monitored party is unable to be serviced by the mobile telephone service equipment.

Another obj ect of the present invention is to provide a remote monitoring system for implementing the method of this invention.

According to one aspect of the invention, a remote monitoring method is to be implemented using mobile telephone service equipment including a mobile telecommunications switching office and a plurality of base stations operably associated with the mobile telecommunications switching office. The remote monitoring method comprises:
a) enabling the mobile telecommunications switching office to receive a monitoring request from a requesting party, the monitoring request including a telephone number used by a target terminal of a monitored party;
b) in response to the monitoring request, enabling the mobile telecommunications switching office to determine if the target terminal of the monitored party is able to be serviced by the mobile telephone service equipment; and
c) upon determining that the target terminal of the monitored party is unable to be serviced by the mobile telephone service equipment, enabling the mobile telecommunications switching office to send a corresponding notification to the requesting party.

According to another aspect of the invention, a remote monitoring system comprises mobile telephone service equipment including a mobile telecommunications switching office and a plurality of base stations operably associated with the mobile telecommunications switching office. The mobile telephone service equipment is configured to perform consecutive steps of the remote monitoring method of this invention.

Other features and advantages of the present invention will become apparent in the following detailed description of the preferred embodiment with reference to the accompanying drawings, of which:
Figure 1 is a schematic diagram of the preferred embodiment of a remote monitoring system according to the present invention; and
Figure 2 is a flowchart illustrating consecutive steps of the preferred embodiment of a remote monitoring method according to the present invention.

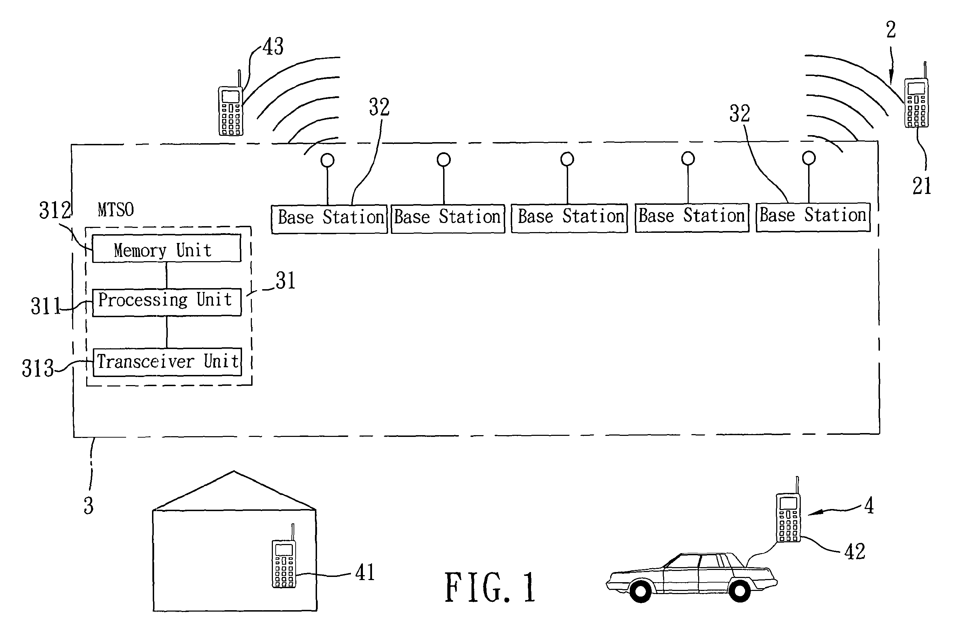

Figure 1 illustrates a remote monitoring system for implementing the remote monitoring method of the present invention. The remote monitoring system includes mobile telephone service equipment 3 administered by a telecommunications service provider. The mobile telephone service equipment 3 includes a mobile telecommunications switching office (MTSO) 31 and a plurality of base stations 32 operably associated with the MTSO 31. The MTSO 31 includes a processing unit 311, a memory unit 312 coupled to the processing unit 311, and a transceiver unit 313 for establishing communications between the MTSO 31 and the base stations 32. Since each of the base stations 32 could be a land base station or a satellite base station, the connection between the MTSO 31 and each of the base stations 32 could be a wired connection or a wireless connection.

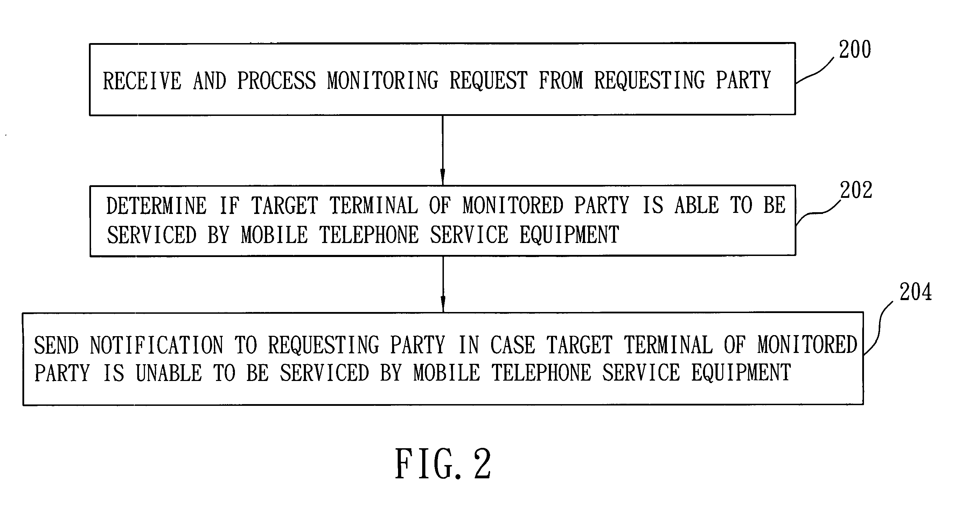

Figure 2 illustrates consecutive steps of the preferred embodiment of the remote monitoring method of this invention. The remote monitoring method includes the following steps:

In step 200, the MTSO 31 is enabled to receive a monitoring request from a requesting party. The requesting party provides the monitoring request to the MTSO 31 by means of a user device 2 operated by the requesting party. The user device 2 may be a cell phone, a land-based telephone set, or any other device capable of communicating with and sending the monitoring request to the MTSO 31. In this embodiment, the monitoring request, which is processed by the processing unit 311 of the MTSO 31, includes a configure code or command to configure a monitoring service function of the mobile telephone service equipment 3, a telephone number used by a target terminal 4 of a monitored party, a main contact telephone number of the requesting party, and a desired form of notification to be received by the requesting party. In particular, while the target terminal 4 is exemplified as a mobile terminal (e.g., a cell phone) in Figure 1, the actual implementation of the target terminal 4 should not be limited thereto as long as the target terminal 4 is with the monitored party. In addition, the desired form of notification can be one of a voice recording, a short message service (SMS) message, an image, etc. The processing unit 311 stores information of the monitoring request in the memory unit 312. Preferably, the processing unit 311 of the MTSO 31 provides voice instructions to the requesting party to guide the requesting party when providing the requisite information of the monitoring request. Preferably, upon detecting that the monitoring request is incomplete or contains an error therein, the processing unit 311 of the MTSO 31 does not accept the monitoring request, and instead instructs the requesting party to generate another monitoring request.

In one embodiment, the monitoring request further includes an activate code or command to activate the monitoring service function of the mobile telephone service equipment 3 after the monitoring service function has been configured. Alternatively, the monitoring service function of the mobile telephone service equipment 3 is activated automatically after completing configuration of the monitoring service function. Preferably, the mobile telephone service equipment 3 terminates the monitoring service function in response to a deactivate code or command from the device 2 of the requesting party.

In step 202, in response to the monitoring request, the processing unit 311 of the MTSO 31 is enabled to determine if the target terminal 4 of the monitored party is able to be serviced by the mobile telephone service equipment 3, i.e., if the target terminal 4 is activated and is within the network coverage of the mobile telephone service equipment 3. In general, the target terminal 4 of the monitored party is registered with one of the base stations 32 when the target terminal 4 of the monitored party is activated and is within the network coverage of the mobile telephone service equipment 3. The MTSO 31 performs control channel signaling with the target terminal 4 of the monitored party through the registered one of the base stations 32 to determine if the target terminal 4 of the monitored party is able to be serviced by the mobile telephone service equipment 3. In particular, the processing unit 311 of the MTSO 31 monitors registration status of the target terminal 4 of the monitored party with the base stations 32 periodically (such as every few seconds) to determine if the target terminal 4 of the monitored party is able to be serviced by the mobile telephone service equipment 3. In this embodiment, the processing unit 311 of the MTSO 31 determines that the target terminal 4 of the monitored party is unable to be serviced by the mobile telephone service equipment 3 if a cumulative count of consecutive unsuccessful registrations initiated by the mobile telephone service equipment 3 reaches a predetermined threshold or if registrations initiated by the mobile telephone service equipment 3 within a predetermined time period are all unsuccessful. Preferably, the predetermined threshold is included in the monitoring request provided by the requesting party in step 200. Through the predetermined threshold, erroneous sending of a notification in case of a temporary loss of signal experienced by the target terminal 4 of the monitored party can be prevented.

In step 204, when the processing unit 311 of the MTSO 31 determines that the target terminal 4 of the monitored party is unable to be serviced by the mobile telephone service equipment 3, the processing unit 311 of the MTSO 31 is enabled to send a corresponding notification to the requesting party. In particular, the processing unit 311 of the MTSO 31 gets in touch with the requesting party through the main contact telephone number of the requesting party that was included in the monitoring request and that is stored in the memory unit 312 when sending the notification to the requesting party. It is noted that the location of the target terminal 4 of the monitored party can be approximated with reference to a registration log, which is kept by the mobile telephone service equipment 3 and which records registration of the target terminal 4 of the monitored party with the base stations 32.

Preferably, the monitoring request further includes at least one backup contact telephone number of the requesting party. Hence, if the MTSO 31 was unsuccessful in sending the notification to the requesting party through the main contact telephone number of the requesting party, the notification could still be sent to the requesting party through the backup contact telephone number of the requesting party that was included in the monitoring request and that is stored in the memory unit 312.

Optionally, the processing unit 311 of the MTSO 31 is configured to alert one of a law enforcement agency and a search and rescue agency if the processing unit 311 of the MTSO 31 was unsuccessful in sending the notification to the requesting party.

The following are two examples to illustrate possible applications of the remote monitoring method and system of the present invention.

Referring to Figure 1, the remote monitoring method and system can be applied to a vehicle anti-burglary scheme. In particular, the device 2 of the requesting party is a cell phone 21. The monitored party is a vehicle owned by the requesting party and installed with a conventional vehicle anti-theft system (not shown). The vehicle anti-theft system serves to detect unlawful intrusion, burglary or vandalism of the vehicle, and is connected to a target terminal 42 (e.g. , a cell phone) in the vehicle so as to be able to communicate with a security agency. After the anti-theft system is installed in the vehicle, the requesting party can send the monitoring request to the mobile telephone service equipment 3 through the cell phone 21 for processing by the processing unit 311 of the MTSO 31. The monitoring request includes a telephone number used by the target terminal 42 in the vehicle. Subsequently, after the requesting party has parked the vehicle, the requesting party can send the activate code or command through the cell phone 21 to activate the monitoring service function of the mobile telephone service equipment 3. Thereafter, upon detection by the processing unit 311 of the MTSO 31 that the target terminal 42 of the monitored party is unable to be serviced by the mobile telephone service equipment 3, such as when the vehicle anti-theft system is disabled by a thief using a high-power radio frequency source, the processing unit 311 of the MTSO 31 is enabled to send a corresponding notification to the cell phone 21 of the requesting party, thereby alerting the requesting party of the need to inspect the vehicle immediately. On the other hand, when the requesting party intends to drive the vehicle, the requesting party can send the deactivate code or command through the cell phone 21 to terminate the monitoring service function of the mobile telephone service equipment 3.

It is evident from the foregoing that the remote monitoring method and system of the present invention can also be applied to a household anti-burglary scheme. In such a scheme, the requesting party is security personnel equipped with a mobile device 2 in the form of a cell phone 21 and responsible for safeguarding a property. The monitored party is a property being guarded by the security personnel and installed with a conventional household anti-theft system (not shown). The household anti-theft system serves to detect unlawful intrusion, burglary or vandalism of the property, and is connected to a target terminal 41 (e. g. , a cell phone) so as to be able to communicate with the security personnel. Likewise, if the processing unit 311 of the MTSO 31 detects that the target terminal 41 of the monitored party is unable to be serviced by the mobile telephone service equipment 3, such as when the household anti-theft system is disabled by a thief using a high-power radio frequency source, the processing unit 311 of the MTSO 31 is enabled to send a corresponding notification to the cell phone 21 of the security personnel, thereby alerting the security personnel of the need to inspect the property with the target terminal 41 immediately.

In a second example, the remote monitoring method and system is applied to a tracking scheme to facilitate search and rescue efforts . In this example, the monitored party is a family member who has a target terminal 43 (e.g., a cell phone) and who is on a camping or hiking trip. The requesting party may be a parent of the family member who activates the monitoring service function of the mobile telephone service equipment 3 through a cell phone 21. If the processing unit 311 of the MTSO 31 detects that the target terminal 43 of the monitored party is unable to be serviced by the mobile telephone service equipment 3, the processing unit 311 of the MTSO 31 is enabled to send a corresponding notification to the cell phone 21 of the requesting party. As mentioned previously herein, the location of the target terminal 43 of the monitored party can be approximated with reference to a registration log that is kept by the mobile telephone service equipment 3 and that records registration of the target terminal 43 of the monitored party with the base stations 32, thereby facilitating search and rescue efforts in the case the monitored party gets lost. Moreover, the processing unit 311 of the MTSO 31 can be optionally configured to alert one of a law enforcement agency and a search and rescue agency to seek assistance therefrom in case the processing unit 311 of the MTSO 31 was unsuccessful in sending the notification to the cell phone 21 of the requesting party.

It has thus been shown that, through the sending of the notification to the requesting party, the requesting party is able to act in an appropriate manner. The remote monitoring method and system of this invention are thus suited for security applications to avoid property loss and can facilitate search and rescue efforts when used to track people.

## Claims

1. A remote monitoring method to be implemented using mobile telephone service equipment (3) including a mobile telecommunications switching office (31) and a plurality of base stations (32) operably associated with the mobile telecommunications switching office (31),
**characterized by**:
a) enabling the mobile telecommunications switching office (31) to receive a monitoring request from a requesting party, the monitoring request including a telephone number used by a target terminal (4) of a monitored party;
b) in response to the monitoring request, enabling the mobile telecommunications switching office (31) to determine if the target terminal (4) of the monitored party is able to be serviced by the mobile telephone service equipment (3); and
c) upon determining that the target terminal (4) of the monitored party is unable to be serviced by the mobile telephone service equipment (3), enabling the mobile telecommunications switching office (31) to send a corresponding notification to the requesting party.

2. The remote monitoring method according to Claim 1, **characterized in that**, in step a), the mobile telecommunications switching office (31) stores information of the monitoring request therein.

3. The remote monitoring method according to any one of the preceding claims, **characterized in that** the monitoring request further includes an activate command to activate monitoring of the target terminal (4) of the monitored party by the mobile telephone service equipment (3), said remote monitoring method being further **characterized by**:
d) enabling the mobile telephone service equipment (3) to terminate monitoring of the target terminal (4) of the monitored party in response to a deactivate command from the requesting party.

4. The remote monitoring method according to any one of the preceding claims, **characterized in that**:
in step a), the monitoring request further includes a main contact telephone number of the requesting party; and
in step c), the mobile telecommunications switching office (31) gets in touch with the requesting party through the main contact telephone number of the requesting party that was included in the monitoring request when sending the notification to the requesting party.

5. The remote monitoring method according to Claim 4, further **characterized in that**:
in step a), the monitoring request further includes a backup contact telephone number of the requesting party; and
in step c), the mobile telecommunications switching office (31) gets in touch with the requesting party through the backup contact telephone number of the requesting party that was included in the monitoring request if the mobile telecommunications switching office (31) was unsuccessful in sending the notification to the requesting party through the main contact telephone number of the requesting party.

6. The remote monitoring method according to any one of the preceding claims, **characterized in that**, in step c), the mobile telecommunications switching office (31) alerts one of a law enforcement agency and a search and rescue agency if the mobile telecommunications switching office (31) was unsuccessful in sending the notification to the requesting party.

7. The remote monitoring method according to any one of the preceding claims, **characterized in that** the target terminal (4) of the monitored party is registered with one of the base stations (32) when the target terminal (4) of the monitored party is activated and is within a network coverage of the mobile telephone service equipment (3); and
in step b), the mobile telecommunications switching office (31) performs control channel signaling with the target terminal (4) of the monitored party through said one of the base stations (32) to determine if the target terminal (4) of the monitored party is able to be serviced by the mobile telephone service equipment (3).

8. The remote monitoring method according to Claim 7, further **characterized by**:
approximating a location of the target terminal (4) of the monitored party with reference to a registration log that is kept by the mobile telephone service equipment (3) and that records registration of the target terminal (4) of the monitored party with the base stations (32).

9. The remote monitoring method according to any one of the preceding claims, **characterized in that**, in step b), the mobile telecommunications switching office (31) monitors registration status of the target terminal (4) of the monitored party with the base stations (32) to determine if the target terminal (4) of the monitored party is able to be serviced by the mobile telephone service equipment (3).

10. The remote monitoring method according to Claim 9, further **characterized in that**, in step b), the mobile telecommunications switching office (31) monitors the registration status of the target terminal (4) of the monitored party with the base stations (32) periodically, and determines that the target terminal (4) of the monitored party is unable to be serviced by the mobile telephone service equipment (3) if a cumulative count of consecutive unsuccessful registrations initiated by the mobile telephone service equipment (3) reaches a predetermined threshold.

11. The remote monitoring method according to Claim 10, further **characterized in that** the predetermined threshold is included in the monitoring request.

12. A remote monitoring system comprising mobile telephone service equipment (3) including a mobile telecommunications switching office (31) and a plurality of base stations (32) operably associated with said mobile telecommunications switching office (31), **characterized in that** said mobile telephone service equipment (3) is configured to perform consecutive steps of a remote monitoring method, said remote monitoring method comprising:
a) enabling saidmobile telecommunications switching office (31) to receive a monitoring request from a requesting party, the monitoring request including a telephone number used by a target terminal (4) of a monitored party;
b) in response to the monitoring request, enabling said mobile telecommunications switching office (31) to determine if the target terminal (4) of the monitored party is able to be serviced by the mobile telephone service equipment (3); and
c) upon determining that the target terminal (4) of the monitored party is unable to be serviced by the mobile telephone service equipment (3), enabling the mobile telecommunications switching office (31) to send a corresponding notification to the requesting party.

13. The remote monitoring system according to Claim 12, further **characterized in that** said mobile telecommunications switching office (31) includes:
a processing unit (311) for processing the monitoring request, for determining if the target terminal (4) is able to be serviced by said mobile telephone service equipment (3), and for sending the corresponding notification to the requesting party upon determining that the target terminal (4) of the monitored party is unable to be serviced by said mobile telephone service equipment (3);
a memory unit (312) coupled to said processing unit (311) for storing information of the monitoring request therein; and
a transceiver unit (313) for establishing communications between said mobile telecommunications switching office (31) and said base stations (32).

14. The remote monitoring system according to Claim 12 or 13, further **characterized in that** said mobile telecommunications switching office (31) alerts one of a law enforcement agency and a search and rescue agency if said mobile telecommunications switching office (31) was unsuccessful in sending the notification to the requesting party.

15. The remote monitoring system according to any one of Claims 12 to 14, further **characterized in that** said mobile telecommunications switching office (31) monitors registration status of the target terminal (4) of the monitored party with said base stations (32) to determine if the target terminal (4) of the monitored party is able to be serviced by said mobile telephone service equipment (3).
